Europäisches Patentamt

European Patent Office

Office européen des brevets

(11) Publication number: **0 084 703**
**B1**

(12) **EUROPEAN PATENT SPECIFICATION**

(45) Date of publication of patent specification: **25.01.89**

(51) Int. Cl.⁴: **G 11 B 7/08, G 02 B 27/40**

(21) Application number: **82306027.2**

(22) Date of filing: **11.11.82**

(54) Partial beam focus sensing device.

(30) Priority: **25.01.82 US 342459**

(43) Date of publication of application:
**03.08.83 Bulletin 83/31**

(45) Publication of the grant of the patent:
**25.01.89 Bulletin 89/04**

(84) Designated Contracting States:
**DE FR GB NL**

(56) References cited:
**EP-A-0 070 552**
**FR-A-2 497 365**
**US-A-4 079 248**

**PATENTS ABSTRACTS OF JAPAN, vol. 6, no. 121 (P-126)999r, 6th July 1982; & JP - A - 57 46 217 (MATSUSHITA DENKI SANGYO K.K.) 16-03-1982**

(73) Proprietor: **MAGNETIC PERIPHERALS INC.**
**8100-34th Avenue South**
**Minneapolis Minnesota 55440 (US)**

(72) Inventor: **Shuman, Curtis Alan**
**7090 Switchback Trail**
**Colorado Springs Colorado 80919 (US)**

(74) Representative: **Caro, William Egerton et al**
**J. MILLER & CO. Lincoln House 296-302 High Holborn**
**London WC1V 7JH (GB)**

Courier Press, Leamington Spa, England.

## Description

This invention relates to partial beam focus sensing devices for use with optical media recording systems.

It is well known that optical media recording systems require a very precisely focused condition of a light beam through an objective lens onto a recording media. The light beam focused on the media is, typically, reflected back through the objective lens and used to read information on the media. The reflected light beam is typically divided into different components one of which may be used for focus detection information to operate a focus control device for a movable objective lens.

In optical recording technology, various focusing and light beam handling devices are known. In US-A-3,974,327 there is shown a schematic diagram of a light beam being returned directly from an objective lens to a light detector array from which a particular focus sensing device operates. A mirror which is partially reflecting and partially transparent may be used to control the splitting of the light beam into different components for various purposes. US-A-4,123,652 shows the use of partially reflecting and partially transparent mirrors or beam splitters to divide the light beam into different components in connection with both an information reading detector for one component and a focusing light detector array for another component. US-A-4,123,652 shows a so-called astigmatic focus sensing device where an image is distorted in a first direction in a first out-of-focus condition with respect to the recording media and in a second direction in a second out-of-focus condition with respect to the recording media. The two out-of-focus conditions with respect to the recording media are those involving the objective lens being too close to the media and too far from the media. It is noted that Figure 7 of US-A-4,123,652 shows a cylindrical lens element in connection with the focusing of a light beam onto the light detector array. However, US-A-4,123,652 is related to astigmatic focus sensing devices rather than partial beam focus sensing devices.

In US-A-3,969,576, separate light detecting elements are arranged to receive a portion of a light beam for use in reading information and another light detecting element is disposed at a different location to receive a light beam for purposes of operating a focus sensing device. The focusing beam is referred to in US-A-3,969,576 as an auxiliary beam while the beam from which information is read is referred to as a read beam. A radiation absorbing knife is disposed between the radiation source and a Woolaston prism to block a portion of the auxiliary beam but which is so disposed with respect to the source and the prism that none of the read beam is blocked. As explained in US-A-3,969,576, the auxiliary beam is returned to a focusing light detector array as only a partial beam. In the focused condition, a comparatively small focused point of light exists on a pair of light detector elements. In one out-of-focus condition, a partial light beam image or half-moon, is focused on one-half or one element of the light detector array and in the other out-of-focus condition a partial light beam image or half-moon is shown on the other half or other element of the light detector array. This, therefore, represents a basic half-moon or partial light beam focus sensing device which is now comparatively well known.

US-A-4,143,402 shows another half-moon focus sensing device in which the light from a source is only partially returned to the focus sensing device and in which the half-moon light spot returned to the focusing source occurs on one-half or one portion of the light detector array for one out-of-focus condition and on the other half or other portion of the light detector array for the other out-of-focus condition. In US-A-4,143,402, a prism reflects one-half of a portion of the light beam returned from the media to the light detector array whilst not affecting the other half of the light beam. The prism is disposed in such a fashion that it does not use all of the reflected light from the media for focusing on the light detector array but allows a portion of the original beam to pass to an information reading light detector array.

Both of the aforementioned partial beam focus sensing devices show a means for forming a partial light beam which is also disposed in the path from the light source to the media and is not disposed so as only to affect light being reflected from the media. Devices adapted for reading from the media only are not as critical as to light lost in the partial beam focus sensing device.

However, for devices in which data is be both read and written, a partial beam focus sensing device in which the light beam travels towards the media may be reduced in strength have a critical disadvantage. In systems, in which the media is to be written, it is important to conserve the power of the writing beams so that only a minimum power writing source may be provided. If the aforementioned partial beam focus sensing devices were to be used in a reading and writing system, they would suffer at least one of several possible disadvantages such that there would be less power in the writing beam, larger spot size on the media than desired because of necessary additional optical elements interposed in the writing beam or comparatively complex or large sized lenses; all as compared to a writing system without such partial beam elements interposed in the writing beam.

Therefore, in systems in which focus is to be maintained during writing on the media, it is clear that it is necessary to provide a focus sensing device which does not require the provisions of any additional optical elements which may interfere with the writing beam. Also, the aforementioned focus sensing devices result in an extremely critical physical relationship between the device creating the partial beam, the knife in the one case or the prism in the other, and the light detecting element. If there should be any misalignment between the focusing light detector array and the prism or knife, then the focus sensing device will not work as intended. It is, therefore, desirable to provide a focus sensing device having a somewhat less critical relationship between the device creating the partial beam and the light detector array.

The astigmatic focusing device shown in US-A-4,123,652 requires two cylindrical lenses or one cylindrical lens and one spherical lens or some other combination of multiple optical elements in order to create an astigmatic focusing pattern. These additional optical elements create additional optical complexity and/or cause loss of light between the media and the light detector array.

An optical memory, system is provided with a known optical system for separating a reflected beam returning from the media so that it passes into an optical partial beam focus sensing device according to the present invention. Typically, such an optical system would use a polarizing beam splitter and a quarter wave plate or a semitransparent reflecting mirror to create a reflected beam portion which is separated from the line of travel of the transmitted beam portion.

EP-A-O070552, having priority dates earlier than that of the present application but published later, discloses a partial beam focus sensing device comprising a lens element for receiving a light beam reflected from optical recording media, a light detector array, a mask element for eliminating a portion of the collimated light beam and transmitting a partial light beam, the light detector array comprising at least two light detecting elements separated by a photoinsensitive region and disposed to receive the partial light beam from the lens element.

US-A-4079248 discloses a partial beam focus sensing device comprising a lens element for receiving a light beam reflected from optical recording media, a light detector array, a mask element for eliminating a portion of the light beam and transmitting a partial light beam, the light detector array comprising two light detecting elements matched to the mask element and disposed to receive the partial light beam from the lens element. Such a device is acknowledged in the first part of claim 1.

A partial beam focus sensing device according to the present invention has particular application in optical recording systems in which information is both written and read on the optical media, and is characterised in that the lens element is a Fresnel lens element, that the light beam is collimated, and that the mask element is located adjacent to said lens element and is centrally divided into a masking sector or sectors exactly opposite a nonmasking sector or sectors.

The lens element may be a spherical Fresnel lens.

Alternatively, the lens element may be a cylindrical Fresnel lens, said light detector array being disposed at an angle with respect to the axis of said cylindrical Fresnel lens.

The mask element may be a knife edge. Alternatively, the mask element may have a plurality of spokes radiating from a centre to divide the light beam into a number of segments, alternate ones blocking light from passing therethrough.

The present invention seeks to provide a partial beam focus sensing device with the advantage that it does not detract from the light beam energy impingent upon the media in a writing mode for an optical system which both reads and writes.

A spherical Fresnel lens causes the light spot on the light detector array to be comparatively larger than it would be with a spherical lens. In a perfect spherical lens, when the optical system has the objective lens in a perfectly focused condition on the optical media, the light impingement on the focusing light detector array tends to converge to a vanishingly small spot. The light detector array then detects the out-of-focus image conditions but has a minimally small light detecting signal output in the focused condition. This minimally small light detecting signal output is, however, subject to noise disturbance. However, the use of a spherical Fresnel lens leaves a larger light spot in the focus condition which is symmetrical on both sides of the axis of the light detector array so that the light detecting elements in the light detector array produce a balanced output representative of a given light strength. This balanced output signal is comparatively free of noise disturbance.

Another embodiment of the present invention uses a cylindrical Fresnel lens together with the knife edge to produce a half-moon image which, in the focused condition, tends to go to thin bar shape or a line shape rather than a light spot as in the case with the spherical lens. This has the advantage of being detected by the light detector array better than a vanishingly small spot.

The invention is illustrated, merely by way of example, in the accompanying drawings, in which:—

Fig. 1 shows a first embodiment of a partial beam focus sensing device according to the present invention using a spherical Fresnel lens and a knife edge;

Fig. 2 is an illustration of another embodiment of a partial beam focus sensing device according to the present invention using a cylindrical Fresnel lens;

Fig. 3a is a side plan view of the device shown in Fig. 2 illustrating the image generated by the cylindrical Fresnel lens;

Fig. 3b is a top view of the device shown in Fig. 2; and

Fig. 4 shows a central symmetric mask element of a partial beam focus sensing device according to the present invention.

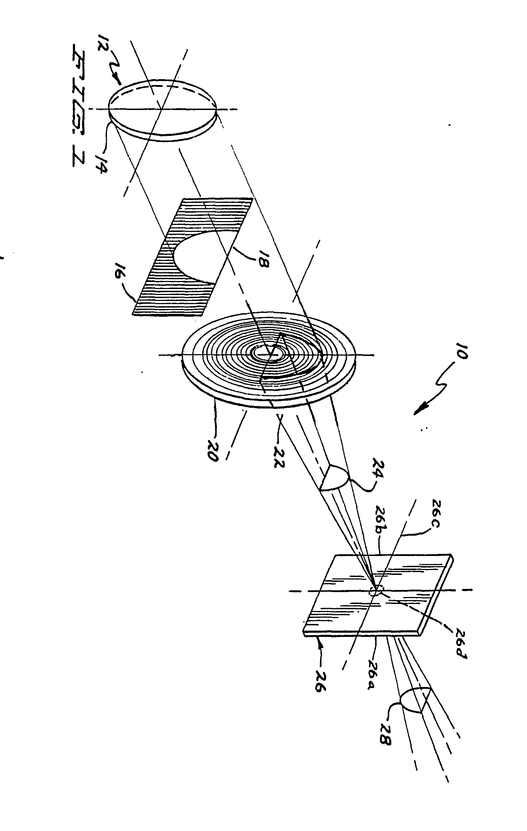

Referring now to Fig. 1, one embodiment of a partial beam focus sensing device 10 according to the present invention is shown using a collimated circular light beam 12 passing into the device as shown schematically at 14. A mask, such as a knife edge element 16, blocks a portion of the beam creating a half-moon image 18 on the knife edge element. The knife edge element may be placed on a spherical Fresnel lens element 20 or in front of it or behind it, but, it is most desirable that it is placed in a proximate position with respect to the spherical Fresnel lens element 20. Masks with patterns other than a simple knife edge may be used so long as the pattern is centre symmetric which the knife edge element shown in Fig. 1 is.

The half-moon image passing through the spherical lens element 20 is shown diagrammatically at 22. In the near-to-focus, pre- and post-focus conditions, half-moon images 24, 28 exist on a light detector array 26 which is divided into an upper half 26a and a lower half 26b by a line 26c to match the mask. However, in focused condition, a round image is formed shown by a dotted line 26d. This allows a greater amount of light to fall on the two halves 26a, 26b of the detector array to produce a stronger and more balanced indication of light output on the detector array which allows the device to work in a balanced but comparatively noise-free condition when the recording media is in a focused condition with respect to the lens element.

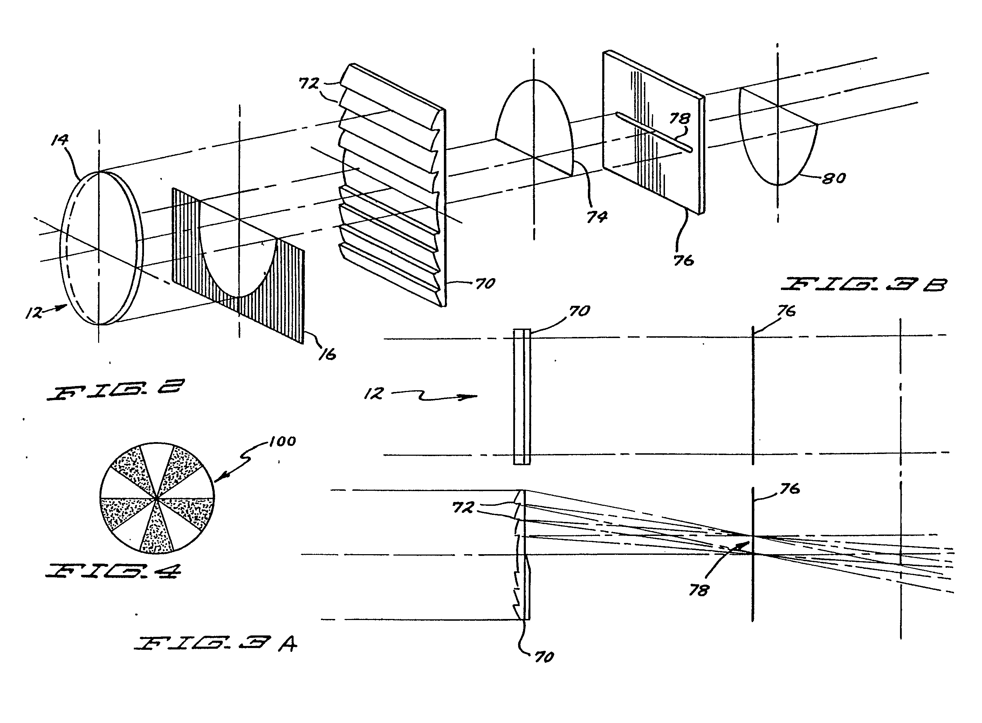

Referring now to Fig. 2, another embodiment of a partial beam focus sensing device according to the present invention is shown using a cylindrical Fresnel lens 70. The cylindrical Fresnel lens has a plurality of individual Fresnel lens elements 72 longitudinally displaced relative to the same axis as the axis of the cylindrical Fresnel lens. The result of using the cylindrical Fresnel lens 70 is the creation of half-moon shaped partial beam images at 74 and 80 showing, respectively, a pre- and post-focus condition of the objective lens element with respect to the optical media. The in-focus light beam produces a bar shaped image 78. Fig. 3a illustrates the device of Fig. 2 with the cylindrical Fresnel lens 70 having individual Fresnel lens elements 72. The ligh beam coming from an individual Fresnel lens element 72 arrives on the light detector array 76 in a focus condition to produce the comparatively wide bar shaped image shown at 78.

It is noted that the partial beam focus sensing device of the present invention only needs a split or dual light detector and not a quadrature light detector which is advantageous from the point of view of simplicity. It is also noted that only a single Fresnel lens is needed in conjunction with the detector array and the knife edge element. Thus, the knife edge element or opaque material which creates the partial beam is clearly a more simple optical element than the provision of additional lenses needed with astigmatic focusing. Thus, the partial beam focus sensing device of the present invention may work with only a single Fresnel lens and a knife edge element rather than with the two lenses needed for astigmatic focusing.

In the illustrated embodiment of the present invention the incoming light beam is simply divided into top and bottom half-moons. Focus sensing is performed by centre symmetric inversion in the plane of the detector array in the in-focus condition. The centre symmetric inversion is always present but, in the out-of-focus condition the detector array is on one side or the other of the centre symmetric inversion. In general, the simplest embodiment of the present invention is to place a mask with a pattern having central symmetry in the path of an incoming collimated light beam. Then a detector array that matches the mask pattern is placed in the expected focal plane for the in-focus condition. Elements of the detector array are then used to produce a differential signal when the light pattern reverses itself.

Examples of appropriate central symmetry mask patterns would be those using centrally radiating spokes including those with symmetric patterns of curved spokes. Various patterns including symmetry about concentric circles can be superimposed on appropriate spoke patterns. The spoke patterns can create segments which may be two in number, as with half-moons or six, ten fourteen etc. The segments need not be of the same size but merely centrally symmetric. Of course numerous other centrally symmetric patterns can be used for a mask.

The various mask patterns have different advantages and disadvantages. The half-moon pattern is probably the simplest to implement and allows electronics associated with the detector array to be simplified. However, a disadvantage can be that alignment detector array is sensitive in the direction perpendicular to the line or terminator separating the two half-moons. This sensitivity is because of the small light spot size at focus. Employing Fresnel lens overcomes these objections. Thus, a more complex segmented mask pattern could also be desirable because it would be less sensitive to linear motion than a half-moon and would have a larger in-focus light spot because of internal beam diffraction from the mask.

For example, Fig. 4 shows a centrally symmetric mask pattern 100 which would be suitable for use with a partial beam focus sensing device according to the present invention, the detector array having a matching pattern. The pattern 100 has ten segments or pie-shaped slices alternate ones blocking light from passing therethrough.

**Claims**

1. A partial beam focus sensing device comprising a lens element (20;70) for receiving a light beam (12) representative of light reflected from optical recording media, a light detector array, (26;46:76), a mask element (16;l00) for eliminating a portion of said light beam and transmitting a partial light beam, the light detector array, comprising at least two light detecting elements (26a,26b;46a,46b) matched to said mask element and disposed to receive said partial beam from said lens element, characterised in the the lens element (20;70) is a Fresnel lens element, that the light beam (12) is collimated, and that the mask element (16;I00) is located adjacent to said lens element and is centrally divided into a masking sector or sectors exactly opposite a non-masking sector or sectors.

2. A device as claimed in claim 1, characterised in that said lens element is a spherical Fresnel lens (20).

3. A device as claimed in claim 1, characterised in that said lens element is a cylindrical Fresnel lens (70), said light detector array (76) being disposed at an angle with respect to the axis of said cylindrical Fresnel lens (70).

4. A device as claimed in any preceding claim, characterised in that said mask element (16) is a knife edge.

5. A device as claimed in any of claims 1 to 3, characterised in that said mask element (100) has a plurality of spokes radiating from a centre to divide the light beam into a number of segments, alternate ones blocking light from passing therethrough.

## Patentansprüche

1. Teilstrahl-Fokussierungsmeßgeröt mit einem Linsenelement (20;70) zum Empfang eines Lichtstrahls (12), der von einem optischen Aufzeichnungsmedium reflektiertes Licht darstellt, mit einer Lichtdetektoranordnung (26;46;76), mit einem Abdeckelement (16;I00) zum Ausschalten eines Teils des Lichtstrahls und zur Weiterleitung eines Teillichtstrahls, wobei die Lichtdetektoranordnung zumindestens zwei Lichtdetektorelemente (26a,26b;46a,46b) umfaßt, die an das Abdeckelement angepaßt und so angeordnet sind, daß sie den Teilstrahl von dem Linsenelement empfangen, dadurch gekennzeichnet, daß das Linsenelement (20;70) ein Fresnel-Linsenelement ist, daß der Lichtstrahl (12) kollimiert ist, und daß das Abdeckelement (16;I00) benachbart zu dem Linsenelement angeordnet und zentrisch in einen Abdecksektor oder Abdecksektoren unterteilt ist, die genau entgegengesetzt zu einem nicht abdeckenden Sektor oder Sektoren angeordnet sind.

2. Gerät nach Anspruch 1, dadurch gekennzeichnet, daß das Linsenelement eine sphärische Fresnel-Linse (20) ist.

3. Gerät nach Anspruch 1, dadurch gekennzeichnet, daß das Linsenelement eine zylindrische Fresnel-Linse (70) ist und daß die Lichtdetektoranordnung (76) unter einem Winkel bezüglich der Achse der zylindrischen Fresnel-Linse (70) angeordnet ist.

4. Gerät nach einem der vorhergehenden Ansprüche, dadurch gekennzeichnet, daß das Abdeckelement (16) eine Messerschneide ist.

5. Gerät nach einem der Ansprüche 1 bis 3, dadurch gekennzeichnet, daß das Abdeckelement (100) eine Vielzahl von Speichen aufweist, die strahlenförmig von einem Mittelpunkt ausgehen, um den Lichtstahl in eine Anzahl von Segmenten zu unterteilen, wobei abwechselnde dieser Speichen den Durchgang von Licht sperren.

## Revendications

1. Dispositif de détection de focalisation par faisceau partiel comportant un élément de lentille (20; 70) pour recevoir un faisceau lumineux (12) représentant de la lumière rèfléchie par un support d'enregistrement optique, un réseau détecteur de lumière (26; 46; 76), un élément de masque (16; I00) destiné à éliminer une partie dudit faisceau lumineux et à transmettre un faisceau lumineux partiel, le réseau détecteur de lumière comportant au moins deux éléments détecteurs de lumière (26a,26b; 46a,46b) adaptés audit élément de masque et disposés pour recevoir ledit faisceau partiel provenant dudit élément de lentille, caractérisé en ce que l'élément de lentille (20; 70) est un élément de lentille de Fresnel, en ce que le faisceau lumineux (12) est collimaté et en ce que l'élément de masque (16; I00) est situé près dudit élément de lentille et divisé en son centre en un ou plusieurs secteurs de masquage exactement opposés à un ou plusieurs secteurs de non masquage.

2. Dispositif selon la revendication 1, caractérisé en ce que ledit élément de lentille est une lentille de Fresnel sphérique (20).

3. Dispositif selon la revendication 1, caractérisé en ce que ledit élément de lentille est une lentille de Fresnel cylindrique (70), ledit réseau dètecteur de lumière (76) étant disposé sous un angle par rapoort à l'axe de ladite lentille de Fresnel cylindrique (70).

4. Dispositif selon l'une quelconque des revendications précédentes, caractérisé en ce que ledit élément de masque (16) est une arête de lame.

5. Dispositif selon l'une quelconque des revendications 1 à 3, caractérisé en ce que ledit élément de masque (100) comporte plusieurs rayons disposés à partir d'un centre pour diviser le rayon lumineux en un certain nombre de segments, ceux alternés bloquant le passage de la lumière à travers eux.

FIG.1

FIG.2

FIG.4

FIG.3A

FIG.3B